# EUROPEAN PATENT APPLICATION

(11) **EP 4 412 232 A1**
(43) Date of publication of application: **07.08.2024**
(21) Application number: 23154491.7
(22) Date of filing: 01.02.2023
(51) Int. Cl.: H04N 23/611, H04N 23/661, H04N 23/73

(54) **METHOD AND SYSTEM FOR OBTAINING A PLURALITY OF CAMERA IMAGES OF A TARGET POSE OVER TIME**

(71) Applicant: Universiteit Antwerpen, 2000 Antwerpen (BE)
(72) Inventor: VANLANDUIT, Steve, 2020 Antwerpen (BE); RIBBENS, Bart, 2020 Antwerpen (BE); SELS, Seppe, 2020 Antwerpen (BE)
(74) Representative: IP HILLS NV

(57) **Abstract**

A method and a system for obtaining a plurality of camera images of a target pose of at least part of a target body over time, wherein said target body is a living body performing a repetitive movement, the method comprising the steps of obtaining a plurality of images captured by a first camera of at least part of said target body; for each of said plurality of obtained images, verifying a presence of a predetermined pose of at least part of said target body, wherein said predetermined pose corresponds to a pose intervening in said repetitive movement at a time span ΔT before the target pose; when said predetermined pose is detected, triggering a second camera to capture at least one image of at least part of said target body.

## Description

### Field of the Invention

The present invention generally relates to a method and a system for obtaining a plurality of camera images of a target pose over time.

### Background of the Invention

In sports, such as for example in running, cycling or other sports, the athlete often performs a series of repetitive movements. To improve sports performance, and in particular said repetitive movements, it is known to obtain and analyse images of the performance, for example by filming a performance by one or more dedicated digital cameras. Analysis of these obtained images can provide useful information on potential problems in the performance.

As a particular example, thermal imaging of a body is configured to record thermal radiation of the body. It is known in the art that thermal imaging or thermography of a body can contribute to the detection and/or follow-up of lesions or of various abnormal body conditions. As an example, cancerous tissue may be recognized in thermal imaging due to increased metabolic activity and blood flow in and around the affected tissue. Another example is tissue affected by an inflammation or infection, which may also be detected due to increased thermal radiation. Additionally, in sports medicine, a relatively high temperature of a part of the human body can point to a potentially undetected physical overloading. Thermal imaging, as well as imaging in other wavelengths such as UV or visual light, of a body may thus be advantageous for monitoring a condition of a target area of the body over time in various medical disciplines.

A known problem when obtaining images of a moving subject is that the obtained data volume may quickly become relatively large, which may complicate data storage and analysis. This may already be the case when using standard cameras but is all the more problematic when using cameras configured to obtain thermal image data, or cameras configured to obtain three-dimensional or four-dimensional image data. Data analysis may then rapidly become extremely time-consuming and may need relatively high computing power. At the same time, a large part of said obtained data may be superfluous, in particular in repetitive movements, when only part of the movement or one or more poses may be of interest for further analysis. As an example, in running it may be of interest to study the way a foot of a runner touches the ground. In cycling, a cyclist may experience pain under a specific angle of his knee. Data analysis may in such cases be limited to only part of the collected image data.

### Summary of the Invention

It is therefore an aim of the present invention to solve or at least alleviate one or more of the above-mentioned problems. In particular, the invention aims at providing a computer-implemented method and system for obtaining a plurality of camera images of a target pose over time which can reduce the obtained data volume and allow relatively efficient data analysis.

To this aim, according to a first aspect of the invention, there is provided a computer-implemented method for obtaining a plurality of camera images of a target pose of at least part of a target body over time, said target body being a living body performing a repetitive movement, the method having the features of claim 1. In particular, the method comprises the steps of obtaining a plurality of images captured by a first camera of at least part of said target body. The first camera may for example capture images of an entire human performing a repetitive movement, such as for example running or cycling or any other repetitive movement. The first camera may also capture images of for example only an arm movement or leg movement of said target body. The first camera preferably captures images substantially continuously, at a relatively high frequency rate. For each of said plurality of images obtained from said first camera, the method comprises the step of verifying a presence of a predetermined pose of at least part of said target body. Said predetermined pose corresponds to a pose intervening in said repetitive movement at a time span ΔT before the target pose. As an example, when a target pose, i.e. a pose of interest for further analysis, includes a predetermined position of a body part, such as a specific position of a leg, a foot, or any other body part, then the predetermined pose can be chosen as being a pose intervening systematically before said target pose. When the target pose is a foot at a highest point on the pedals of a bike in cycling, then the predetermined position to detect may for example be said foot when said pedals are more or less 45° before their highest point. The step of verifying or identifying a presence of a predetermined pose may also include verifying a presence of one of a plurality of predetermined poses. When said predetermined pose is detected, the method comprises the step of triggering a second camera to capture at least one image of at least part of said target body at said time span ΔT after detection of said predetermined pose. In other words, the method searches for a predetermined pose in images captured by and obtained from a first camera to timely trigger a second camera at a time span after said detected predetermined pose, allowing the second camera to only capture images of the desired target pose. The previous steps, i.e. the step of obtaining a plurality of images, of verifying a presence of, and of detecting, a predetermined pose and of triggering a second camera, are repeated, thereby obtaining a plurality of camera images of the target pose over time. In this way, data storage and data analysis can be limited to images of the desired target pose captured by the second camera only, thus saving precious computation time, storage capacity and calculation means.

It has proven advantageous that the step of triggering the second camera includes sending an electric impulse to the second camera. An electric impulse is an example of a hardware trigger in contrast to a software trigger. Said hardware trigger may for example be sent by a computer system, for example the computer system configured to process image data obtained from the first camera, via a GPIO line, or via a data acquisition (DAQ) card. Such an electric impulse can be sent directly to an input port of the second camera. In this way, it is possible to control the exact moment when the second camera captures one or more images. Additionally, using a hardware trigger to trigger the second camera can allow an improved synchronisation when multiple second cameras are used and/or when additional material, such as flashlights, need to be triggered substantially simultaneously. Alternatively, software triggers can be used to trigger said second camera, for example via a communication line, which may require considerable bandwidth of a USB-bus or an ethernet port. However, software triggers seem to be less accurate in timing than a hardware trigger. Moreover, multiple cameras and/or devices cannot be synchronized accurately when receiving software triggers.

The time span ΔT can preferably include at least a computer calculation time for the step of verifying a presence and detecting said predetermined pose of at least part of said target body and a recording time of the second camera to capture at least one image of at least part of the target body. The computer calculation time may include obtaining an image captured by the first camera, determining a pose of the target body captured by the first camera and deciding whether or not said pose corresponds to the predetermined pose. The recording time may be defined as the time between the sending of a trigger to the second camera and the acquisition of an image by the second camera. Said computer calculation time, as well as said recording time of the second camera, are more or less known, so it can be taken into account in the time span needed to timely trigger the second camera such that the second camera can indeed capture an image of the desired target pose.

The time span ΔT may be adjustable and may further be at least partly based on a frequency of the repetitive movement in a time window preceding said predetermined pose. When a living body is performing a repetitive movement, such as for example running, cycling, rowing or any other repetitive movement, he or she may not perform said repetitive movement continuously at a same speed over time. When the movement is accelerated, the time span between an occurrence of the predetermined pose and the target pose is shortened. When the movement is slowed down, the time span between an occurrence of the predetermined pose and the target pose is extended. The method may therefore include a further step of determining the time span ΔT at least partly based on a frequency of the repetitive movement in a time window preceding said predetermined pose. Since the movement is a repetitive movement, a frequency or periodicity of said movement may be determined, for example in a time window as close as possible to the predetermined pose. Determining said frequency or periodicity may for example be done using known methods based on Fast Fourier transforms, such as a periodogram. The frequency within said time window may then be extrapolated such that a time span between an occurrence of the predetermined pose and the target pose may be estimated. In this way, the time span ΔT may be adjustable and take into account an acceleration or deceleration of the repetitive movement. In this way, a time series of images captured by the second camera of the desired target pose may be obtained in spite of an acceleration or deceleration of the repetitive movement.

The step of verifying or identifying a presence of a predetermined pose of at least part of said target body may preferably comprise skeletonizing each of said plurality of obtained images of said target body captured by the first camera. Skeletonizing is a process for reducing foreground regions in a binary image, which can be extracted from visual images using segmentation, to a skeletal remnant that largely preserves the extent and connectivity of the original region while throwing away most of the original foreground pixels. In other words, images of the human body can be reduced to a plurality of connected and/or hinged lines which can correspond more or less to a simplified human skeleton. Thereto, each of the images obtained from the first camera can be converted into a keypoint representation of the target body representing joints of said target body, which is an approximation of the biomechanics of the target body. Different methods to do skeletonization exist and preferably use convolutional neural networks. In this way, movement of the target body, of which images captured by the first camera are being obtained, can be simulated relatively well while keeping processing capacity requirements relatively low. Alternatively, sensors, tags or markers, for example infrared reflective markers, placed on the target body, or external sensors, may be used to determine a relative position of a body member of the target body to detect a predetermined pose. Even if treatment of sensor data may be relatively fast, the placement of the sensors on a target body may be cumbersome. Moreover, the sensors may hinder the repetitive movement.

The target pose and/or the predetermined pose may advantageously correspond to an angle between body members of the target body. Angles between body members of the target body can be determined relatively easily on the plurality of obtained images, in particular after skeletonizing each of said plurality of images. As an example, when the repetitive movement is cycling, then the target pose, or pose of interest to be studied, may be a largest angle between a shin and a thigh of the living being, and the predetermined pose may for example be an angle of more or less 30° between said tibia and said thigh. Other angles between other body members can also be used. Alternatively, an angle between a body member and an external surface may be determined, for example an angle between a foot and the ground, for example a treadmill, on which the target body is running.

The method can further comprise the steps of, for each of said plurality of images obtained from the first camera, verifying a presence, and possibly detecting a further predetermined pose of at least part of said target body. When said further predetermined pose is detected, the method may include the step of triggering the second camera to stop capturing images. These steps may in particular be useful when the second camera has been triggered to capture a plurality of images. A plurality of images may be a fixed number of images, or a number of images during a fixed time span, or a plurality of images until the second camera is triggered to stop capturing images. In this way, images may be obtained from a first desired target pose until a desired second target pose and provide a range of poses which may be of interest for further analysis. Alternatively, the second camera may be triggered to capture only one image, a fixed number of images or a number of images during a predetermined time span.

The second camera can preferably be one of an infrared camera, a UV camera or a visual camera. In other words, the second camera may be configured to capture infrared images, UV images or images in the visual spectrum, i.e. light visible to a human eye having a wavelength varying between approximately 400 nm to 760 nm. The choice of wavelength of the second camera may be determined by the type of analysis which may be performed on the plurality of camera images of the target pose over time obtained by the present method. As an example, it is known in the art that thermal imaging or thermography of a human body can contribute to the detection and/or follow-up of lesions or of various abnormal body conditions. Thereto, the second camera may for example be configured to capture images in a range of wavelengths from near-infrared to long-wave infrared, for example between more or less 760 nm to 14 µm. Other applications may benefit from UV images, ranging from approximately 100 nm to approximately 400 nm in wavelength, for example in the monitoring of burns. The second camera may include a CCD or CMOS sensor or any other sensor (InGaAs, InSb, MCT, SLS, microbolometer, or others) suitable to the desired wavelength and a corresponding lens system.

The second camera can be configured to capture 2D images of at least part of said target body. Two-dimensional imaging (2D) has the advantage of requiring less processing power and processing time than three-dimensional imaging (3D) while still allowing to provide relevant information on a condition of the target body. Thereto, a regular RGB camera may be used. Alternatively, the second camera may be configured to capture 3D images. Thereto, the second camera may include a stereo vision system allowing extraction of 3D information from a set of two cameras of the stereo vision system. Alternatively, the second camera may include a structured light imaging system using a combination of a projected light pattern with one or more cameras to calculate 3D information. Still alternatively, the second camera may include a time-of-flight camera system in which 3D information is derived from measuring travelling time of reflected light.

The first camera can advantageously be an RGB camera or a greyscale camera, in particular an RGB camera or a greyscale camera configured to capture 2D images. A greyscale camera may for example be configured to capture images in the visual spectrum and/or in the near-infrared spectrum. Such cameras can provide relatively precise images, in particular of a target body performing a repetitive movement. At the same time, 2D RGB images may require less processing capacity and time than for example 3D images or stereoscopic images, which is important when the plurality of images of obtained from the first camera need to be analysed to detect a predetermined pose of at least part of said target body.

The repetitive movement may for example include running, in particular on a treadmill. Running includes a plurality of repetitive movements, such as arm movement, leg movement, and/or a foot movement. Each of these movements may need detailed analysis to improve performance, to check loads and/or to detect anomalies. When running on a treadmill, a speed of the treadmill may be adjustable such that the target body can remain on more or less the same spot in spite of acceleration and/or deceleration of the movement, which is advantageous to capture a plurality of images of said target body with a fixed camera without the need for following a displacement of the target.

According to a further aspect of the invention, there is provided a system for obtaining a plurality of camera images of a target pose of at least part of a target body, said target body being a living body performing a repetitive movement, the system having the features of claim 11. In particular, the system comprises a first camera configured to capture a plurality of images of at least part of said target body, a second camera configured to, at reception of a trigger, capture at least one image of at least part of said target body, and a controller and a memory with computer program code configured to perform the method as described above. Such a system can provide one or more of the above-mentioned advantages. In particular, the system is a relatively low-cost system which can allow obtaining a plurality of camera images of the target pose over time requiring less image storage capacity than known systems.

According to a further aspect of the invention, there is provided a controller comprising at least one processor and at least one memory including computer program code, the at least one memory and computer program code configured to, with the at least one processor, cause the controller to perform the method as described above.

According to a further aspect of the invention, there is provided a computer program product comprising computer-executable instructions for performing the method as described above when the program is run on a computer.

According to a further aspect of the invention, there is provided a computer readable storage medium comprising computer-executable instructions for performing the method as described above the program is run on a computer.

### Brief Description of the Drawings

Fig. 1 shows a preferred embodiment of a system for obtaining a plurality of camera images of a target pose of at least part of a target body according to an aspect of the invention;
Fig. 2a and 2b show a schematic flow chart of a preferred embodiment of the computer-implemented method for obtaining a plurality of camera images of a target pose of at least part of a target body over time according to an aspect of the invention; and
Fig. 3 shows a computing system suitable for performing various steps of the method for obtaining a plurality of camera images of a target pose of at least part of a target body over time according to an aspect of the invention.

### Detailed Description of Embodiment(s)

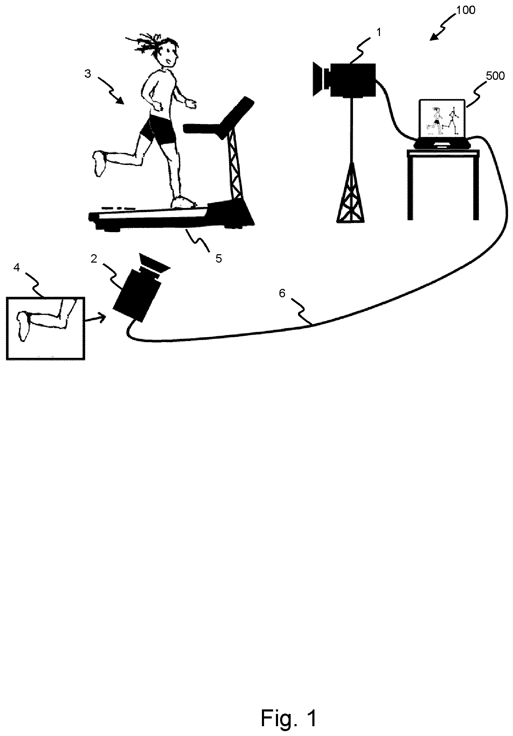

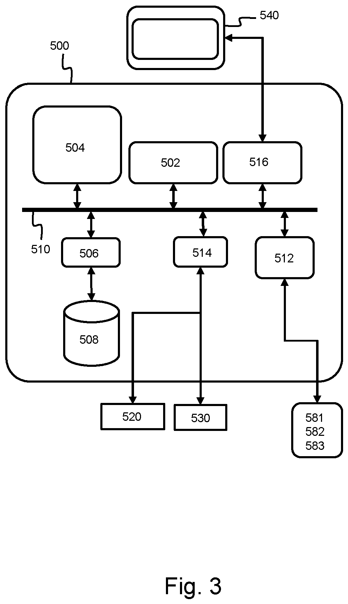

Figure 1 shows a preferred embodiment of a system 100 for obtaining a plurality of camera images of a target pose 4 of at least part of a target body 3 according to an aspect of the invention. Said target body 3 is a living body performing a repetitive movement, for example running on a treadmill 5, but many other set-ups are possible as well, such as for example cycling on a stationary bike or exercising on a training device or lifting weights or just jumping or doing other exercises without using any additional training device. The system 100 includes a first camera 1 configured to capture a plurality of images of at least part of said target body 3. More preferably, the first camera 1 may be configured to capture a plurality of images of said target body 3 substantially entirely. The first camera 1 is preferably configured to capture images at a relatively high frequency rate, for example at a rate between more or less 30 Hz and more or less 100 Hz, more preferably substantially continuously. The first camera 1 is preferably a 2D camera configured to capture 2D images of at least part of said target body 3, which require relatively low computing capacity to process. The first camera 1 is preferably an RGB camera or a greyscale camera. The system further includes a second camera 2 configured to, at reception of a trigger, capture at least one image of at least part of said target body 3. The second camera 2 may for example be one of an infrared camera, a UV camera, or a visual camera. The second camera 2 may preferably be configured to capture 2D images. The system 100 further comprises a computer system 500, as shown for example in Figure 3, including a controller and a memory with computer program code configured to perform the computer-implemented method as will be described hereafter. The computer system 500 is operatively connected to the first camera 1 and to the second camera 2. The second camera 2 is advantageously configured to be triggered by an electric impulse to capture at least one image of at least part of said target body 3. Thereto, the computer system 500 may for example include a GPIO line 6 operatively connected with the second camera 2. The system 100 may for example be used in sports medicine where a target pose 4 of a target body 3 performing a repetitive movement may be of interest for further analysis. The target pose 3 may for example be a given position of a foot, or an angle between body members. When only one target pose intervening during a movement is of interest, it may take quite some storage and/or calculation power and time to store all images taken for example by the first camera 1 and to extract only those images of the target pose 4, which are of interest for further analysis, for example to find a cause of pain. The method according to the present invention can at least partly obviate that drawback.

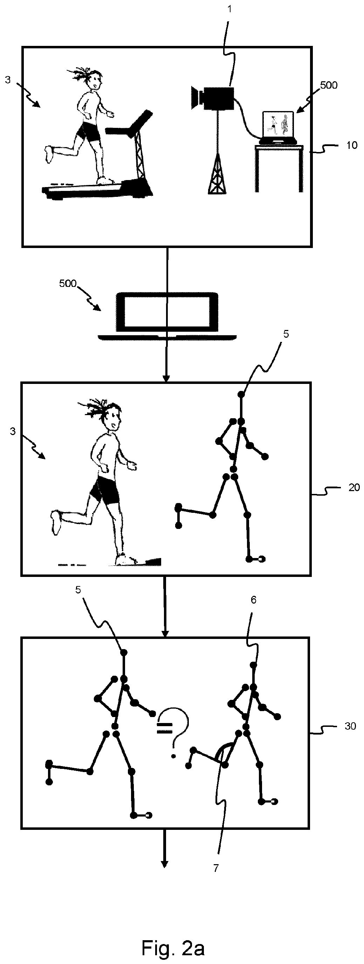

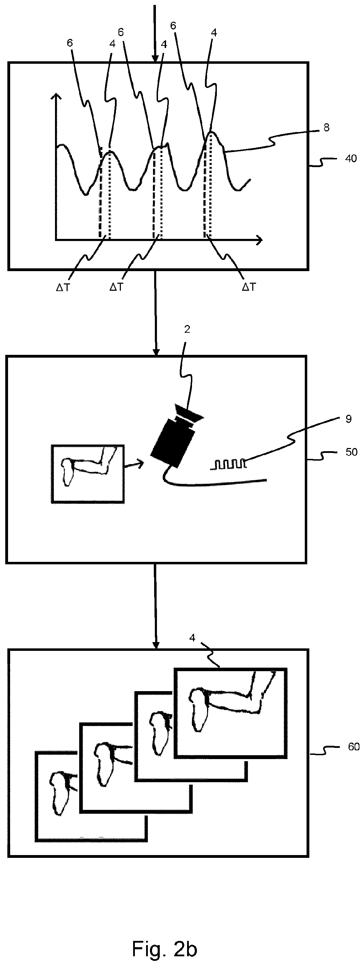

Figures 2a and 2b show a schematic flow chart of a preferred embodiment of the computer-implemented method for obtaining a plurality of camera images of a target pose 4 of at least part of a target body 3 over time according to an aspect of the invention. 'Over time' may mean at regular or irregular intervals, in particular obtaining an image per cycle within the repetitive movement. In step 10 of said preferred embodiment of the method, a plurality of images captured by the first camera 1 is obtained by a computing system 500. The plurality of images may be taken substantially continuously by said first camera 1. The plurality of images are images of at least part of the target body 3, preferably of substantially an entire target body 3, the target body performing a repetitive movement, such as running on a treadmill.

In step 20 of said preferred embodiment of the method, each of said plurality of images of said target body 3 captured by the first camera 1 can preferably be skeletonized. Skeletonization is a process for reducing foreground regions in a binary image, obtained by segmenting said image captured by the first camera 1, to a skeletal remnant that largely preserves the extent and connectivity of the original region while throwing away most of the original foreground pixels. Thereto, each of the images obtained from the first camera 1 can be converted into a keypoint representation of the target body representing joints of said target body 3, which is an approximation of the biomechanics of the target body. Different methods to do skeletonization exist and preferably use convolutional neural networks. As a result, a skeletonized model 5 of a momentary posture of the target body 3 at a given time is obtained.

In step 30 of said preferred embodiment of the method, it is verified for each of said plurality of obtained images, whether or not a predetermined pose 6 of at least part of said target body 3 is present. Said predetermined pose 6 corresponds to a pose intervening in said repetitive movement at a time span ΔT before the target pose 4. The predetermined pose 6 may for example correspond to an angle 7 between body members of the target body 3, for example to an angle 7 between an upper leg and a lower leg of the target body 3. Said verification may preferably be done on the skeletonized representations 5 of the target body 3. When the target pose 4 is for example a smallest angle of for example around 90° between the upper leg and the lower leg of the target body 3, the predetermined pose 6 may for example be an angle of around 110° between said upper leg and said lower leg of the target body, since said angle of 110° intervenes before the angle of more or less 90° when the angle decreases. Said time span ΔT may be fixed or variable and can include at least a computer calculation time for the steps 20 and 30 of verifying a presence of and detecting said predetermined pose 6 of at least part of said target body 3 and a recording time of the second camera 2 to capture at least one image of at least part of the target body 3, which is discussed under step 50.

In step 40 of said preferred embodiment of the method, the time span ΔT may be determined, in particular when the time span is adjustable. The time span ΔT may for example at least partly be based on a frequency of the repetitive movement in a time window preceding said predetermined pose 6. The frequency within said time window may then be extrapolated such that a time span between an occurrence of the predetermined pose and the target pose may be estimated. As an example, the graph 8 can represent an angle 7 between a thigh and a shin in function of time, as measured during the repetitive movement of the target body 3. Even if the movement is repetitive, the movement may include accelerations and/or decelerations. The graph 8 may be analysed with known methods to determine a frequency or periodicity within a time window preceding said predetermined pose 6. In this way, the time span ΔT may be determined in spite of accelerations and/or decelerations within the repetitive movement.

In step 50 of said preferred embodiment of the method, the second camera 2 is triggered to capture at least one image of at least part of said target body 3 at said time span ΔT after detection of said predetermined pose 6, when said predetermined pose is detected. The second camera 2 may be one of an infrared camera, a UV camera, or a visual camera. Triggering the second camera 2 is preferably performed by sending an electric impulse 9 to the second camera 2. Instead of capturing a whole-body image, the second camera 2 may be configured to capture an image of only part of said target body 3, depending on the required target pose 4. Instead of capturing only one image of at least part of the target body 3, the second camera 2 may be triggered to capture a series of images of at least part of said target body 3. Said capturing of images by the second camera 2 may be performed for a fixed number of images, or during a predetermined period of time. Alternatively, the method may further comprise the steps of verifying a presence of a further predetermined pose of at least part of said target body for each of said plurality of images obtained from the first camera 1, in analogy with step 30 but with a further predetermined pose different from the predetermined pose 6, and when said further predetermined pose is detected, triggering the second camera 2 to stop capturing images. In other words, the second camera 2 may be configured to be triggered to start capturing a plurality of images as well as to be triggered to stop said capturing, both triggers being based on a respective predetermined pose detected by the computer system 500 in the images captured by and received from the first camera 1. In this way, a series of target poses can be obtained in spite of variations in speed and/or frequency in the repetitive movement of the target body 3.

In step 60 of said preferred embodiment of the method, the previous steps, for example steps 20, 30, 40 and 50, can be repeated, thereby obtaining a plurality of camera images of the target pose 4 over time, in particular one or more images of the target pose 4 per cycle within the repetitive movement. Since the capturing of the images can be limited to those images useful for further analysis, the quantity of data to be analysed can be limited, which can save computation time and storage space.

Figure 3 shows a suitable computing system 500 comprising circuitry enabling the performance of steps of embodiments of the method for processing a plurality of camera images of a human body target area over time according to an aspect of the invention. Computing system 500 may in general be formed as a suitable generalpurpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for obtaining a plurality of camera images of a target pose of at least part of a target body over time, wherein said target body is a living body performing a repetitive movement, the method comprising the steps of:
- obtaining a plurality of images captured by a first camera of at least part of said target body;
- for each of said plurality of obtained images, verifying a presence of a predetermined pose of at least part of said target body, wherein said predetermined pose corresponds to a pose intervening in said repetitive movement at a time span ΔT before the target pose;
- when said predetermined pose is detected, triggering a second camera to capture at least one image of at least part of said target body at said time span ΔT after detection of said predetermined pose,
- repeating the previous steps, thereby obtaining a plurality of camera images of the target pose over time.

2. The method according to claim 1, wherein the triggering the second camera includes sending an electric impulse to the second camera.

3. The method according to any of the preceding claims, wherein the time span ΔT includes at least a computer calculation time for the step of verifying a presence and detecting said predetermined pose of at least part of said target body and a recording time of the second camera to capture at least one image of at least part of the target body.

4. The method according to any of the preceding claims, wherein the time span ΔT is adjustable and at least partly based on a frequency of the repetitive movement in a time window preceding said predetermined pose.

5. The method according to any of the preceding claims, wherein the step of verifying a presence of a predetermined pose of at least part of said target body comprises skeletonizing each of said plurality of obtained images of said target body captured by the first camera.

6. The method according to any of the preceding claims, wherein the target pose and/or the predetermined pose corresponds to an angle between body members of the target body.

7. The method according to any of the preceding claims, further comprising the steps of:
- for each of said plurality of images obtained from the first camera, verifying a presence of a further predetermined pose of at least part of said target body;
- when said further predetermined pose is detected, triggering the second camera to stop capturing images.

8. The method according to any of the preceding claims, wherein the second camera is one of an infrared camera, a UV camera, or a visual camera.

9. The method according to any of the preceding claims, wherein the first camera is an RGB camera, in particular an RGB camera configured to capture 2D images, or wherein the first camera is a greyscale camera.

10. The method according to any of the preceding claims, wherein the repetitive movement includes running, in particular on a treadmill.

11. A system for obtaining a plurality of camera images of a target pose of at least part of a target body, wherein said target body is a living body performing a repetitive movement, the system comprising:
- a first camera configured to capture a plurality of images of at least part of said target body;
- a second camera configured to, at reception of a trigger, capture at least one image of at least part of said target body;
- a controller and a memory with computer program code configured to perform the method according to any of the preceding claims.

12. A system according to claim 11, wherein said second camera is configured to be triggered by an electric impulse to capture at least one image of at least part of said target body.

13. A controller comprising at least one processor and at least one memory including computer program code, the at least one memory and computer program code configured to, with the at least one processor, cause the controller to perform the methods according to any of the preceding claims 1 -10.

14. A computer program product comprising computer-executable instructions for performing the methods according to any of the preceding claims 1 - 10 when the program is run on a computer.

15. A computer readable storage medium comprising computer-executable instructions for performing the methods according to any of the preceding claims 1 - 10 when the program is run on a computer.
